# EUROPEAN PATENT SPECIFICATION

(11) **EP 2 822 120 B1**
(45) Date of publication and mention of the grant of the patent: **20.01.2016**
(21) Application number: 13175205.7
(22) Date of filing: 05.07.2013
(51) Int. Cl.: H02G 3/12, H02G 3/06, H02G 3/08

(54) **Mounting box**
Anbringungskasten
Boîtier de montage

(43) Date of publication of application: 07.01.2015
(73) Proprietor: ABB Oy, 00380 Helsinki (FI)
(72) Inventor: Andersson, Johan, 06100 Porvoo (FI); Didriksson, Lars, 06100 Porvoo (FI); Tervo, Pekka, 06100 Porvoo (FI)
(74) Representative: Kolster Oy Ab

(56) References cited:
- SE-C2- 532 287

## Description

### FIELD OF THE INVENTION

The present invention relates to a mounting box according to preamble of independent claim 1.

A mounting box with an adjustment collar is known in the art. SE 532 287 discloses such a mounting box. Further, an adjustment collar whose axial position with relation to a box case is adjustable is known in the art.

One of the problems associated with a known mounting box with an axially adjustable adjustment collar is that locking between the adjustment collar and the box case is not reliable. Therefore the adjustable adjustment collar may move away from its intended axial position even when the adjustable adjustment collar is locked to the box case.

### BRIEF DESCRIPTION OF THE INVENTION

An object of the present invention is to provide a mounting box with a reliable locking mechanism between an axially adjustable adjustment collar and a box case. The objects of the invention are achieved by a mounting box which is characterized by what is stated in the independent claim. The preferred embodiments of the invention are disclosed in the dependent claims.

The invention is based on the idea of providing a mounting box with a fixing member pivotally supported to an adjustment collar, the fixing member comprising a contact surface adapted to co-operate with a counterpart surface inside a box case for attaching the adjustment collar to the box case, the fixing member being adapted to be locked in a locking position.

An advantage of the mounting box of the invention is that attachment between the adjustment collar and the box case is reliable.

### BRIEF DESCRIPTION OF THE DRAWINGS

In the following the invention will be described in greater detail by means of preferred embodiments with reference to the attached drawings, in which
Figure 1 shows a mounting box according to an embodiment of the invention;
Figure 2 shows a cross section of the mounting box of Figure 1 as seen from an axial direction; and
Figure 3 shows a cross section of a detail of the mounting box of Figure 1 as seen from a lateral direction.

### DETAILED DESCRIPTION OF THE INVENTION

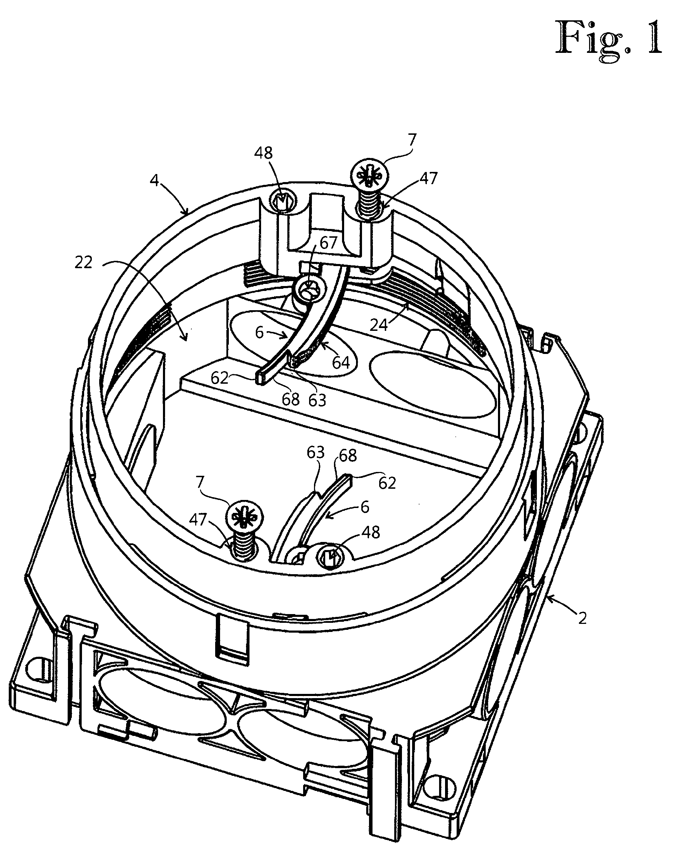

Figure 1 shows a mounting box comprising a box case 2, an adjustment collar 4 and attachment means. The box case 2 defines a mounting space for accommodating an electrical component, such as a wall socket or a light switch. The box case 2 has a box opening 22 providing an access into the mounting space. The attachment means is adapted for attaching the adjustment collar 4 to the inside periphery of the mounting space in a selected position and to prevent both axial and rotational movement of the adjustment collar 4 with relation to the box case 2. The adjustment collar 4 is a tubular element with a circular outer periphery. Due to its tubular shape the adjustment collar 4 provides an access into the mounting space when the adjustment collar 4 is attached to the box case 2.

The attachment means comprises two fixing member 6. Each fixing member 6 is pivotally supported to the adjustment collar 4 for pivoting between a disengaged position and a locking position. Each fixing member 6 comprises a contact surface 64 which is adapted to co-operate with a counterpart surface 24 on the inside periphery of the mounting space in the locking position of the fixing member 6. When the fixing members 6 are in the disengaged position they allow both axial movement of the adjustment collar 4 with relation to the box case 2 and rotational motion of the adjustment collar 4 with relation to the box case 2. Therefore position of the adjustment collar 4 with relation to the box case 2 may be adjusted both in depth direction and in rotational direction. Each fixing member 6 is adapted to be locked in the locking position with a screw 7.

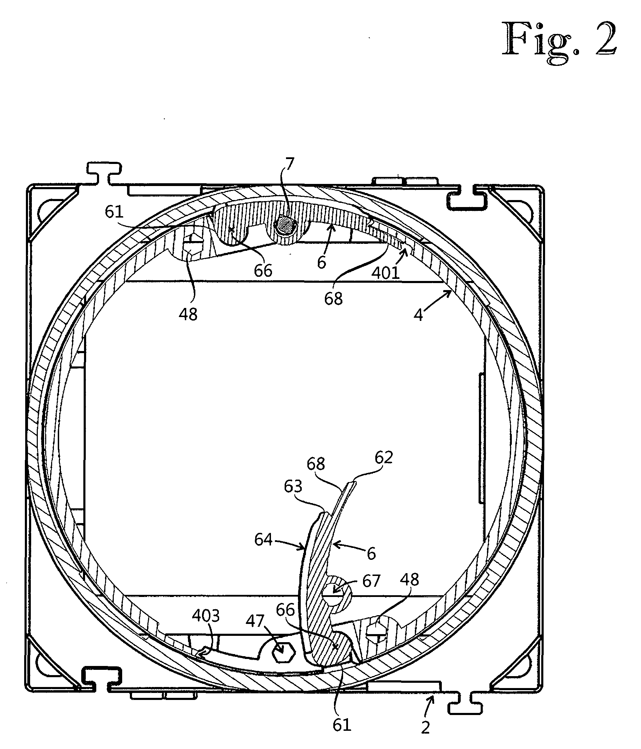

In Figure 1 both fixing members 6 are in the disengaged position. In Figure 2 upper fixing member is in the locking position while lower fixing member is in the disengaged position. A pivoting axis 66 of each fixing member is located adjacent a first end 61 of the fixing member and is substantially parallel to the axial direction of the adjustment collar 4. The axial direction of the adjustment collar 4 is parallel to the direction in which the adjustment collar 4 is inserted into the box case. When the adjustment collar 4 is rotated with relation to the box case 2 the rotation takes place about a rotational axis parallel to the axial direction of the adjustment collar 4. In Figure 2 the axial direction of the adjustment collar 4 is perpendicular to the image plane.

Each fixing member 6 comprises a locking aperture 67 adapted to receive a portion of a screw 7 for locking the fixing member 6 in the locking position. The locking aperture 67 is located between the pivoting axis 66 of the fixing member 6 and a second end 62 of the fixing member 6. The locking aperture 67 extends substantially parallel to the pivoting axis 66 of the fixing member 6. The locking aperture 67 extends through the fixing member 6.

The adjustment collar 4 comprises a screw aperture 47 adapted to coincide with the locking aperture 67 of the fixing member 6 in the locking position of the fixing member 6 such that locking of the fixing member 6 in the locking position with a screw 7 is enabled. In Figure 1 screws 7 are in their upper positions allowing movement of the fixing members 6 between the disengaged position and the locking position.

An upper edge of the screw aperture 47 is adjacent an upper edge of the adjustment collar 4. Therefore the screw aperture 47 is also adapted for fastening the electrical component to the adjustment collar 4 with the screw 7. The adjustment collar 4 further comprises two additional apertures 48 adapted for fastening the electrical component to the adjustment collar 4 with screws.

Each fixing member 6 comprises a release projection 68 in a second end 62 of the fixing member 6. The release projection 68 is adapted for releasing the fixing member 6 from the locking position. One can release the fixing member 6 with a tool such as a screwdriver or with a fingernail. Figure 2 shows that there is a small recess 401 in the inner periphery of the adjustment collar 4 adjacent the second end of the upper fixing member thereby facilitating releasing of the upper fixing member from the locking position. It is only possible to release the fixing member 6 from the locking position by means of the release projection 68 when the fixing member 6 is not locked in the locking position with a screw 7.

Each fixing member 6 comprises a snap projection 63 adapted to co-operate with a counterpart portion 403 provided in the adjustment collar 4 for maintaining the fixing member 6 in the locking position. Connection between the snap projection 63 and the counterpart portion 403 is a snap connection whose operation is based on elasticity of material.

Each fixing member 6 further comprises an eccentric surface adjacent the pivoting axis 66 thereof. The eccentric surface is adapted to co-operate with a counterpart surface of the adjustment collar 4 for maintaining the fixing member 6 in the locking position.

In the embodiment of Figure 2 the snap projection 63 and the eccentric surface are adapted to maintain the fixing member 6 in the locking position until the fixing member 6 is locked with a screw 7. In an alternative embodiment a fixing member is locked in the locking position without a screw. In such embodiment locking means for locking a fixing member may comprise a snap projection adapted to co-operate with a counterpart portion provided in the adjustment collar and/or an eccentric surface adjacent a pivoting axis of a fixing member.

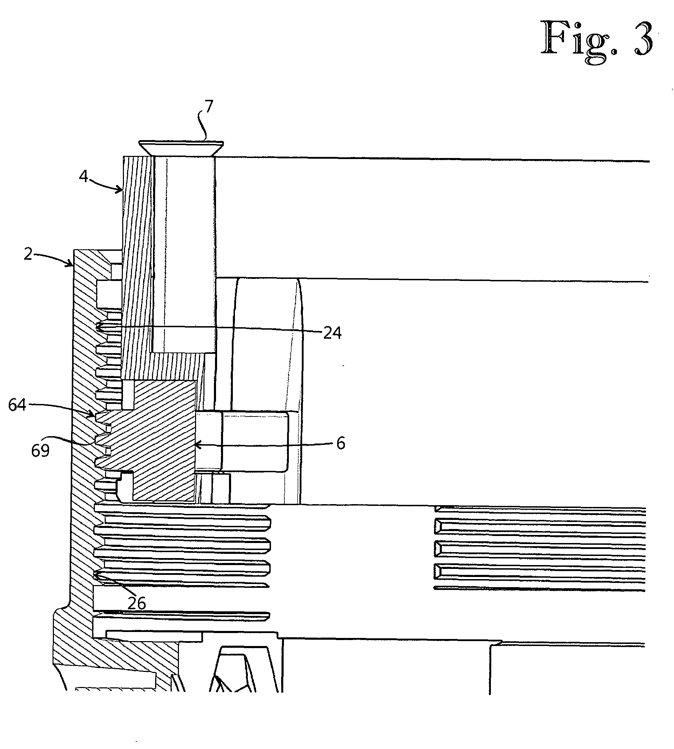

In the cross section shown in Figure 3 the fixing member 6 is in the locking position in which the contact surface 64 of the fixing member 6 protrudes from the outer surface of the adjustment collar 4 in order to co-operate with the counterpart surface 24 on the inside periphery of the mounting space. In Figure 3 the screw 7 is in its lower position thereby locking the fixing member 6 in the locking position.

The counterpart surface 24 on the inside periphery of the mounting space comprises a plurality of peripheral grooves 26 spaced apart in the axial direction, and the contact surface 64 of each fixing member 6 comprises three peripheral projections 69 adapted to engage three peripheral grooves on the inside periphery of the mounting space in the locking position of the fixing member 6. Each peripheral projection 69 projects into a corresponding peripheral groove 26. Axial position of the adjustment collar 4 with relation to the box case 2 may be selected due to the fact that there are a dozen peripheral grooves 26 on the inside periphery of the mounting space while the contact surface 64 of the fixing member 6 only has three peripheral projections 69.

Material of the fixing member 6 is harder than material of the box case 2. Rotational movement of the adjustment collar 4 with relation to the box case 2 is prevented by means of sufficient friction between the peripheral projections 69 and the peripheral grooves 26. Axial movement of the adjustment collar 4 with relation to the box case 2 is prevented due to the geometry of the peripheral projections 69 and the peripheral grooves 26.

In an alternative embodiment a contact surface of a fixing member may comprise peripheral grooves while a counterpart surface on the inside periphery of the mounting space comprises a plurality of peripheral projections. In another alternative embodiment grooves and projections have helical shapes. It is also possible to realize co-operation between a contact surface of a fixing member and a counterpart surface on the inside periphery of the mounting space without grooves and projections. The co-operation may be based on mere friction.

The fixing members 6 of the embodiment shown in the figures are adapted to prevent both axial movement of the adjustment collar 4 with relation to the box case 2 and rotational motion of the adjustment collar 4 with relation to the box case 2. In alternative embodiments at least one fixing member may be adapted to prevent only axial movement of an adjustment collar with relation to a box case or rotational motion of an adjustment collar with relation to the box case. In an embodiment an adjustment collar is adjustable only in rotational direction and therefore at least one fixing member is adapted to prevent only rotational motion of the adjustment collar with relation to a box case.

It will be obvious to a person skilled in the art that the inventive concept can be implemented in various ways. The invention and its embodiments are not limited to the examples described above but may vary within the scope of the claims.

## Claims

1. A mounting box comprising:
a box case (2) defining a mounting space for accommodating an electrical component, the box case (2) having a box opening (22) providing an access into the mounting space;
an adjustment collar (4) adapted to be attached to an inside periphery of the mounting space, and
attachment means for attaching the adjustment collar (4) to the inside periphery of the mounting space in a selected position, the attachment means being adapted to prevent movement of the adjustment collar (4) with relation to the box case (2), **characterized in that**
the attachment means comprises at least one fixing member (6) pivotally supported to the adjustment collar (4) for pivoting between a disengaged position and a locking position, the at least one fixing member (6) comprising a contact surface (64) which is adapted to co-operate with a counterpart surface (24) on the inside periphery of the mounting space in the locking position of the fixing member (6), the at least one fixing member (6) being adapted to be locked in the locking position.

2. A mounting box according to claim 1, **characterized in that** a pivoting axis (66) of the at least one fixing member (6) is located adjacent a first end (61) of the at least one fixing member (6) and is substantially parallel to the axial direction of the adjustment collar (4).

3. A mounting box according to claim 2, **characterized in that** the at least one fixing member (6) is adapted to be locked in the locking position with a screw (7).

4. A mounting box according to claim 3, **characterized in that** the at least one fixing member (6) comprises a locking aperture (67) adapted to receive a portion of a screw (7) for locking the at least one fixing member (6) in the locking position, the locking aperture (67) being located between the pivoting axis (66) of the at least one fixing member (6) and a second end (62) of the at least one fixing member (6), the locking aperture (67) extending substantially parallel to the pivoting axis (66) of the at least one fixing member (6).

5. A mounting box according to claim 4, **characterized in that** the adjustment collar (4) comprises a screw aperture (47) adapted to coincide with the locking aperture (67) of the at least one fixing member (6) in the locking position of the at least one fixing member (6) such that locking of the at least one fixing member (6) in the locking position with a screw (7) is enabled.

6. A mounting box according to claim 5, **characterized in that** the screw aperture (47) is further adapted for fastening the electrical component to the adjustment collar (4) with the screw (7).

7. A mounting box according to claim 5 or 6, **characterized in that** the adjustment collar (4) comprises at least one additional aperture (48) adapted for fastening the electrical component to the adjustment collar (4) with a screw.

8. A mounting box according to any one of claims 2 to 7, **characterized in that** the at least one fixing member (6) comprises a release projection (68) in a second end (62) of the at least one fixing member (6), the release projection (68) being adapted for releasing the at least one fixing member (6) from the locking position.

9. A mounting box according to any one of preceding claims, **characterized in that** the at least one fixing member (6) comprises a snap projection (63) adapted to co-operate with a counterpart portion (403) provided in the adjustment collar (4) for maintaining the at least one fixing member (6) in the locking position.

10. A mounting box according to any one of preceding claims, **characterized in that** the adjustment collar (4) is a tubular element with a circular outer periphery.

11. A mounting box according to any one of preceding claims, **characterized in that** the counterpart surface (24) on the inside periphery of the mounting space comprises a plurality of peripheral grooves (26) spaced apart in the axial direction, and the contact surface (64) of the at least one fixing member (6) comprises at least one peripheral projection (69) adapted to engage a peripheral groove (26) on the inside periphery of the mounting space in the locking position of the at least one fixing member (6).

12. A mounting box according to any one of preceding claims, **characterized in that** the contact surface (64) of the at least one fixing member (6) is adapted to protrude from the outer surface of the adjustment collar (4) in the locking position of the at least one fixing member (6).

13. A mounting box according to any one of preceding claims, **characterized in that** the at least one fixing member (6) is adapted to prevent axial movement of the adjustment collar (4) with relation to the box case (2) in the locking position of the at least one fixing member (6).

14. A mounting box according to any one of preceding claims, **characterized in that** the at least one fixing member (6) is adapted to prevent rotational motion of the adjustment collar (4) with relation to the box case (2) in the locking position of the at least one fixing member (6).

15. A mounting box according to any one of preceding claims, **characterized in that** material of the at least one fixing member (6) is harder than material of the box case (2).

## Patentansprüche

1. Eine Einbaudose, aufweisend:
einen Dosenkasten (2), der einen Einbauraum zur Unterbringung einer elektrischen Komponente definiert, welcher Dosenkasten (2) eine Dosenöffnung (22) hat, die einen Zugang in den Einbauraum bereitstellt;
einen Justierkragen (4), der angepasst ist um an einer inneren Peripherie des Einbauraums befestigt zu werden, und
Befestigungseinrichtungen zum Befestigen des Justierkragens (4) an der inneren Peripherie des Einbauraums in einer ausgewählten Position, welche Befestigungseinrichtungen angepasst sind, um Bewegungen des Justierkragens (4) bezüglich des Dosenkastens (2) zu verhindern,
**dadurch gekennzeichnet, dass**
die Befestigungseinrichtungen mindestens ein Fixierelement (6) zum Drehen zwischen einer ausgekoppelten Position und einer Sperrposition aufweisen, welches zentral drehbar zum Justierkragen (4) gelagert ist, welches mindestens eine Fixierelement (6) eine Kontaktoberfläche (64) aufweist, die angepasst ist, um in der Sperrposition des Fixierelements (6) mit einer Entsprechungsgegenstückoberfläche (24) an der inneren Peripherie des Einbauraums zusammenzuwirken, wobei das mindestens eine Fixierelement (6) angepasst ist, um in der Sperrposition vorriegelt zu werden.

2. Eine Einbaudose nach Anspruch 1, **dadurch gekennzeichnet, dass** eine zentrale Drehachse (66) des mindestens einen Fixierelements (6) sich angrenzend an ein erstes Ende (61) des mindestens einen Fixierelements (6) befindet und im Wesentlichen parallel zu der axialen Richtung des Justierkragens (4) ist.

3. Eine Einbaudose nach Anspruch 2, **dadurch gekennzeichnet, dass** das mindestens eine Fixierelement (6) angepasst ist, um in der Sperrposition mit einer Schraube (7) vorriegelt zu werden.

4. Eine Einbaudose nach Anspruch 3, **dadurch gekennzeichnet, dass** das mindestens eine Fixierelement (6) eine Sperröffnung (67) aufweist, die angepasst ist, um einen Abschnitt einer Schraube (7) aufzunehmen, um das mindestens eine Fixierelement (6) in der Sperrposition zu verriegeln, wobei die Sperröffnung (67) sich zwischen der zentralen Drehachse (66) des mindestens einen Fixierelements (6) und einem zweiten Ende (62) des mindestens einen Fixierelements (6) befindet, wobei die Sperröffnung (67) sich parallel zu der zentralen Drehachse (66) des mindestens einen Fixierelements (6) erstreckt.

5. Eine Einbaudose nach Anspruch 4, **dadurch gekennzeichnet, dass** der Justierkragen (4) eine Schraubenöffnung (47) aufweist, die angepasst ist, um sich in der Sperrposition des mindestens einen Fixierelements (6) so mit der Sperröffnung (67) des mindestens einen Fixierelements (6) zu überschneiden, dass das Verriegeln des mindestens einen Fixierelements (6) in der Sperrposition mit einer Schraube (7) ermöglicht wird.

6. Eine Einbaudose nach Anspruch 5, **dadurch gekennzeichnet, dass** die Schraubenöffnung (47) ferner angepasst ist, um die elektrische Komponente mit der Schraube (7) an den Justierkragen (4) zu schrauben.

7. Eine Einbaudose nach Anspruch 5 oder 6, **dadurch gekennzeichnet, dass** der Justierkragen (4) mindestens eine zusätzliche Öffnung (48) aufweist, die angepasst ist, um die elektrische Komponente mit einer Schraube an den Justierkragen (4) zu schrauben.

8. Eine Einbaudose nach einem der Ansprüche 2 bis 7, **dadurch gekennzeichnet, dass** das mindestens eine Fixierelement (6) einen Entriegelungsvorsprung (68) in einem zweiten Ende (62) des mindestens einen Fixierelements (6) aufweist, welcher Entriegelungsvorsprung (68) zum Entriegeln des mindestens einen Fixierelements (6) aus der Sperrposition angepasst ist.

9. Eine Einbaudose nach einem der voranstehenden Ansprüche,
**dadurch gekennzeichnet, dass** das mindestens eine Fixierelement (6) einen Schnapp-Vorsprung (63) aufweist, der angepasst ist, um mit einem Entsprechungsgegenstückabschnitt (403), der in dem Justierkragen (4) bereitgestellt ist, zusammenzuwirken, um das mindestens eine Fixierelement (6) in der Sperrposition zu halten.

10. Eine Einbaudose nach einem der voranstehenden Ansprüche,
**dadurch gekennzeichnet, dass** der Justierkragen (4) ein röhrenförmiges Element mit einer zirkularen äußeren Peripherie ist.

11. Eine Einbaudose nach einem der voranstehenden Ansprüche,
**dadurch gekennzeichnet, dass** die Entsprechungsgegenstückoberfläche (24) an der inneren Peripherie des Einbauraumes eine Mehrzahl von peripheren Nuten (26) aufweist, die in axialer Richtung voneinander beabstandet sind, und dass die Kontaktoberfläche (64) des mindestens einen Fixierelements (6) mindestens einen peripheren Vorsprung (69) aufweist, der angepasst ist um in der Sperrposition des mindestens einen Fixierelements (6) mit einer peripheren Nut (26) an der inneren Peripherie des Einbauraums in Eingriff zu gelangen.

12. Eine Einbaudose nach einem der voranstehenden Ansprüche,
**dadurch gekennzeichnet, dass** die Kontaktoberfläche (64) des mindestens einen Fixierelements (6) angepasst ist, um in der Sperrposition des mindestens einen Fixierelements (6) aus der äußeren Oberfläche des Justierkragens (4) hervorzustehen.

13. Eine Einbaudose nach einem der voranstehenden Ansprüche,
**dadurch gekennzeichnet, dass** das mindestens eine Fixierelement (6) angepasst ist, um in der Sperrposition des mindestens einen Fixierelements (6) axiale Bewegungen des Justierkragens (4) bezüglich des Dosenkastens (2) zu verhindern.

14. Eine Einbaudose nach einem der voranstehenden Ansprüche,
**dadurch gekennzeichnet, dass** das mindestens eine Fixierelement (6) angepasst ist, um in der Sperrposition des mindestens einen Fixierelements (6) rotatorische Bewegungen des Justierkragens (4) bezüglich des Dosenkastens (2) zu verhindern.

15. Eine Einbaudose nach einem der voranstehenden Ansprüche,
**dadurch gekennzeichnet, dass** das Material des mindestens einen Fixierelements (6) härter ist als das Material des Dosenkastens (2).

## Revendications

1. Caisse de montage comprenant :
un boîtier de caisse (2) définissant un espace de montage pour recevoir un composant électrique, le boîtier de caisse (2) ayant une ouverture de caisse (22) offrant un accès dans l'espace de montage ;
un collier d'ajustement (4) qui est à même d'être joint à la périphérie intérieure de l'espace de montage et
des moyens de jonction pour joindre le collier d'ajustement (4) à la périphérie interne de l'espace de montage dans une position choisie, les moyens de jonction étant à même d'empêcher le mouvement du collier d'ajustement (4) par rapport au boîtier de caisse (2), **caractérisée en ce que** :
les moyens de jonction comprennent au moins un élément de fixation (6) supporté à pivotement sur le collier d'ajustement (4) pour pivoter entre une position dégagée et une position de verrouillage, le au moins un élément de fixation (6) comprenant une surface de contact (64) qui est à même de coopérer avec une surface antagoniste sur la périphérie interne de l'espace de montage en position de verrouillage de l'élément de fixation (6), le au moins un élément de fixation (6) étant à même d'être verrouillé en position de verrouillage.

2. Caisse de montage selon la revendication 1, **caractérisée en ce qu'**un axe de pivotement (66) du au moins un élément de fixation (6) est situé en position adjacente à une première extrémité (61) du au moins un élément de fixation (6) et est sensiblement parallèle à la direction axiale du collier d'ajustement (4).

3. Caisse de montage selon la revendication 2, **caractérisée en ce que** le au moins un élément de fixation (6) est à même d'être verrouillé en position de verrouillage par une vis (7).

4. Caisse de montage selon la revendication 3, **caractérisée en ce que** le au moins un élément de fixation (6) comprend une ouverture de verrouillage (67) qui est à même de recevoir une partie d'une vis (7) pour verrouiller le au moins un élément de fixation (6) en position de verrouillage, l'ouverture de verrouillage (67) étant située entre l'axe de pivotement (66) du au moins un élément de fixation (6) et une seconde extrémité (62) du au moins un élément de fixation (6), l'ouverture de verrouillage (67) s'étendant sensiblement parallèlement à l'axe de pivotement (66) du au moins un élément de fixation (6).

5. Caisse de montage selon la revendication 4, **caractérisée en ce que** le collier d'ajustement (4) comprend une ouverture de vis (47) qui est à même de coïncider avec l'ouverture de verrouillage (67) du au moins un élément de fixation (6) en position de verrouillage du au moins un élément de fixation (6) de sorte que le verrouillage du au moins un élément de fixation (6) en position de verrouillage avec une vis (7) soit permis.

6. Caisse de montage selon la revendication 5, **caractérisée en ce que** l'ouverture de vis (47) est en outre à même de fixer le composant électrique au collier d'ajustement (4) avec la vis (7).

7. Caisse de montage selon la revendication 5 ou la revendication 6, **caractérisée en ce que** le collier d'ajustement (4) comprend au moins une ouverture supplémentaire (48) qui est à même de fixer le composant électrique au collier d'ajustement (4) avec une vis.

8. Caisse de montage selon l'une quelconque des revendications 2 à 7, **caractérisée en ce que** le au moins un élément de fixation (6) comprend une saillie de libération (68) à une seconde extrémité (62) du au moins un élément de fixation (6), la saillie de libération (68) étant à même de libérer le au moins un élément de fixation (6) de la position de verrouillage.

9. Caisse de montage selon l'une quelconque des revendications précédentes, **caractérisée en ce que** le au moins un élément de fixation (6) comprend une saillie à déclic (63) qui est à même de coopérer avec une partie antagoniste (403) ménagée dans le collier d'ajustement (4) pour maintenir le au moins un élément de fixation (6) en position de verrouillage.

10. Caisse de montage selon l'une quelconque des revendications précédentes, **caractérisée en ce que** le collier d'ajustement (4) est un élément tubulaire présentant une périphérie externe circulaire.

11. Caisse de montage selon l'une quelconque des revendications précédentes, **caractérisée en ce que** la surface antagoniste (24) sur la périphérie interne de l'espace de montage comprend une pluralité de rainures périphériques (26) espacées dans la direction axiale et la surface de contact (64) du au moins un élément de fixation (6) comprend au moins une saillie périphérique (69) qui est à même de s'engager dans une rainure périphérique (26) sur la périphérie interne de l'espace de montage en position de verrouillage du au moins un élément de fixation (6).

12. Caisse de montage selon l'une quelconque des revendications précédentes, **caractérisée en ce que** la surface de contact (64) du au moins un élément de fixation (6) est à même de faire saillie de la surface externe du collier d'ajustement (4) en position de verrouillage du au moins un élément de fixation (6).

13. Caisse de montage selon l'une quelconque des revendications précédentes, **caractérisée en ce que** le au moins un élément de fixation (6) est à même d'empêcher le mouvement axial du collier d'ajustement (4) par rapport au boîtier de caisse (2) en position de verrouillage du au moins un élément de fixation (6).

14. Caisse de montage selon l'une quelconque des revendications précédentes, **caractérisée en ce que** le au moins un élément de fixation (6) est à même d'empêcher le mouvement de rotation du collier d'ajustement (4) par rapport au boîtier de caisse (2) en position de verrouillage du au moins un élément de fixation (6).

15. Caisse de montage selon l'une quelconque des revendications précédentes, **caractérisée en ce que** le matériau du au moins un élément de fixation (6) est plus dur que le matériau du boîtier de caisse (2).
